# EUROPEAN PATENT APPLICATION

(11) **EP 1 679 402 A2**
(43) Date of publication of application: **12.07.2006**
(21) Application number: 05027154.3
(22) Date of filing: 13.12.2005
(51) Int. Cl.: D06F 39/12, D06F 95/00

(54) **Household appliance device for the washing**

(30) Priority: 05.01.2005 IT TO20050003
(71) Applicant: Genotti Brat, Andrea, 10076 Torino (IT)
(72) Inventor: Genotti Brat, Andrea, 10076 Torino (IT)
(74) Representative: Aprà, Mario

(57) **Abstract**

The household appliance device (10) for the washing includes a washing machine (14), a tumble-drying machine and the like. According to the invention, it comprises a frame (11) for supporting said machine (M), wherein the height of the frame (11) is chosen so that the opening (O) of the overlain machine (M) can be accessed, for the operations of unloading and loading the laundry, by a person in erect position. Furthermore, it comprises a supporting horizontal shelf (13), slidingly assembled and which can be extracted and closed again like a drawer with respect to the frame (11).

## Description

The present invention relates to a household appliance device for the washing, such as a washing device, a tumble-drying device and the like.

Preferably, but not exclusively, the invention can be applied in household appliance devices for the washing with front loading, wherein the laundry is introduced and extracted through a window-like front opening of a washing machine, of a tumble-drying machine or the like, opening which can be selectively closed and opened by means of a watertight port.

In such household appliance devices, the small height of the window-like opening with respect to the ground obliges the person performing the operations of loading and unloading the laundry to operate in a crouched position with the bend legs, which not only is uncomfortable and tiring, but also dangerous for the health.

Furthermore, during the loading and unloading operations part of the laundry often falls down onto the ground, by getting dirty with consequent damage for the hygiene.

Besides, the need is felt to be able to pick up the dirty laundry, waiting for the washing, close to the household appliance device for the washing, without increasing the overall dimensions onto the ground.

Starting from knowing such drawbacks, the invention wishes to solve them.

An object of the present invention is to provide a household appliance device for the washing which allows to the person to perform the operations of loading and unloading the laundry in substantially erect position.

Another object of the invention is to provide a household appliance device for the washing which avoids the falling-down to the ground of the laundry during the loading and unloading operations and which facilitates the operations themselves.

An additional object of the present invention is to provide a household appliance device for the washing which allows to pick up the dirty laundry, waiting for the washing, near the household appliance device for the washing, without increasing the overall dimensions on the ground.

In view of such purposes, the present invention provides a household appliance device for the washing, the main feature thereof forms the subject of claim 1.

Additional advantageous features are described in the depending claims.

The claims mentioned above are intended reported here integrally.

The present invention will better result from the following detailed description, with reference to the enclosed drawings provided by way of example only, wherein:
- figure 1 is a front perspective view and a view of the right side of the household appliance device for the washing according to an exemplifying embodiment of the invention, wherein a washing machine is illustrated with lines with strokes and dots, whereas the device is represented in a use condition thereof;
- figure 2 is a front partial view and a view of the right side of the device of figure 1, wherein the washing machine is omitted for illustrative clarity;
- figure 3 is a view similar to the one of figure 2, but showing the front view and the other side, as well as a different use condition of the device according to the invention.

By referring to the drawings, the household appliance device for the washing according to said exemplifying embodiment of the invention is designated as a whole with 10.

Said household appliance device 10 mainly comprises a washing machine M with window-like front opening O and a frame 11 for supporting the machine M itself. Said frame 11 is made of metallic sections, for example electro-welded sections, and it has basic sizes substantially corresponding to the ones of the washing machine M. Besides, the height of the frame 11 is chosen so that the window-like opening O of the overlain machine M can be accessed, for the unloading and loading operations of the laundry, by a person in erect position.

Said frame 11 includes a horizontal plane rectangular frame 11.1 and four vertical legs 11.2, respectively fastened at the angles of the frame 11.1 and extended downwards from the frame itself. Some metallic angle bars 11.3 stiffen the structure of the frame 11.1, which firmly supports said washing machine M, for example by means of known on themselves and not illustrated locking means. Besides, diagonal cross irons 11.4 connect the legs 11.2 in pairs, on the sides and on the rear, by making solid the structure of the frame 11. Frontally, the space between the legs 11.2 is free. The legs 11.2 are further equipped with screw feet 11.5 for the height adjustment.

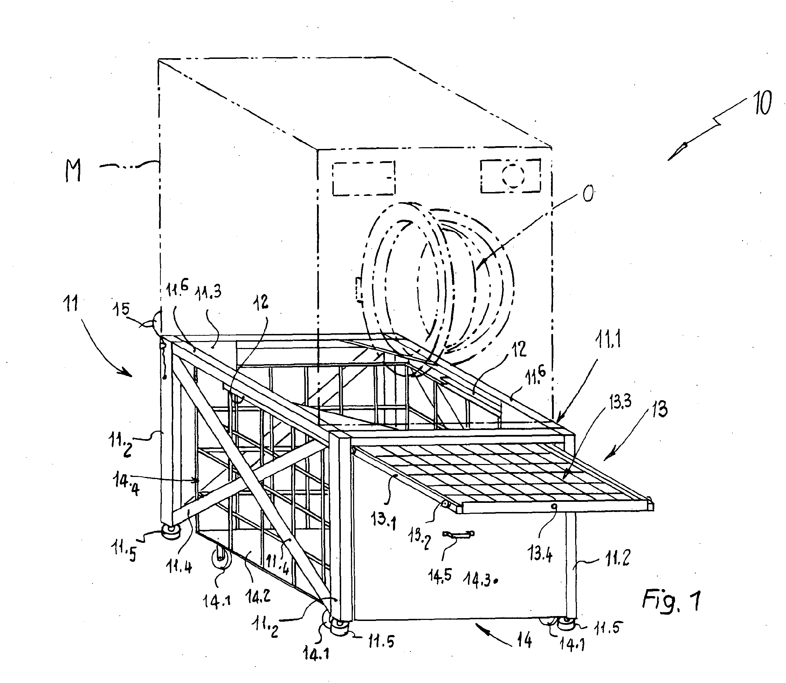

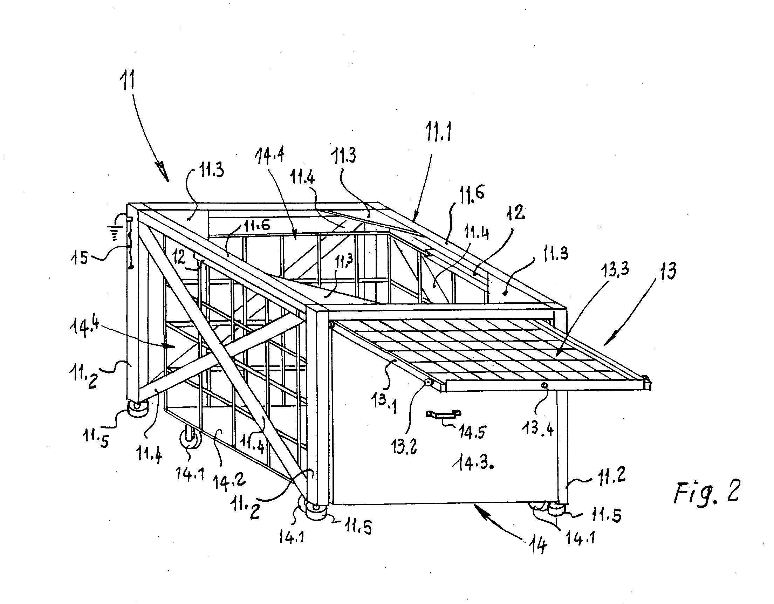

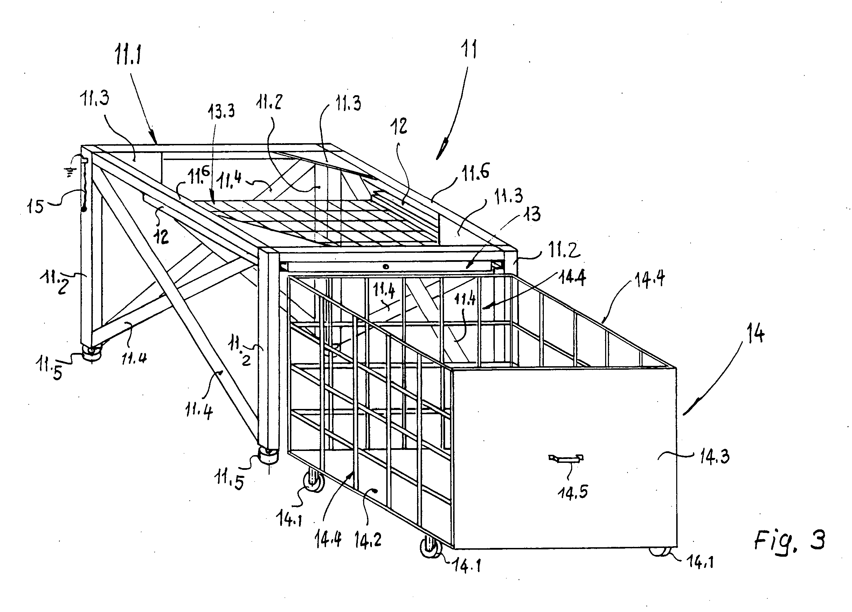

Two opposed longitudinal prismatic, metallic, for example "C"-like, guides 12 are respectively fastened (for example welded) parallely and immediately below with respect to the two opposite iron girders 11.6 of the frame 11 and a horizontal supporting shelf 13 is slidingly assembled with respect to said guides 12 so as to be able to be extracted frontally and closed again like a drawer with respect to the frame 11. Said sliding horizontal shelf 13 is formed by a peripheral rectangular and metallic frame 13.1 equipped with wheels or sliding bearings 13.2 with respect to said guides 12 and by an inner resting plane 13.3, for example made of a stainless metallic grid, fastened (for example welded) with respect to the peripheral frame 13.1. Said supporting horizontal plane 13 is arranged below the window-like opening O of the machine M, proximate the opening itself. In the figures 1 and 2 said shelf 13 is illustrated extended with respect to the frame 11, in the use position, whereas in figure 3 the same shelf is illustrated closed again with respect to said frame, in position of minimum overall dimensions. A front knob 13.4 of the shelf 13 facilitates the drawer-like opening and closing operations thereof.

In the inner free compartment of the frame 11, accessible through the front opening between the front legs 11.2 of the frame itself, and below said supporting horizontal shelf 13, a basket 14 sliding onto the ground on wheels 14.1 is arranged in the stand-by position. The bottom 14.2 and the front wall 14.3 of the basket 14 are made, for example, of pressed wood coated with plastic-laminated board, whereas the remaining side walls 14 are made, for example, of stainless metallic grid. In the figures 1 and 2 said basket 14 is illustrated put back under condition of minimum overall dimensions inside the frame 11, in stand-by position, whereas in figure 3 the same basket is illustrated extracted with respect to said frame, in the use position. A handle 14.5 of the basket 14 facilitates the drawer-like opening and closing operations thereof with respect to the frame 11.

It is to be noted that the frame 11 is equipped with an insulated electric cable 15 for the earthing, which can be electrically connected to a corresponding earthing terminal of the washing machine M.

### Operation:

The household appliance device for the washing 10 allows to carry out the following operations in a comfortable way, whereas the person who carries them keeps substantially the erect position:
- introduction into the washing machine M, through the window-like opening O with opened port, of the laundry to be washed previously accumulated onto the supporting horizontal shelf 13 extracted with respect to the frame 11, as illustrated in figure 1;
- inversely, extraction from the washing machine M, through the window-like opening O with opened port, of the washed laundry and which is gradually accumulated onto the supporting horizontal shelf 13 extracted with respect to the frame 11, as illustrated in figure 1;
- accumulation of the dirty laundry to be washed in the basket 14, which is slidingly extracted, when necessary, with respect to the frame 11 (figure 3), to be then put back therein (figures 1, 2).

### Advantages of the invention:

The invention provides a household appliance device for the washing, which allows to the person to perform the operations of loading and unloading the laundry in substantially erect position:
Furthermore, the invention provides a household appliance device for the washing which avoids the falling-down to the ground of the laundry during the loading and unloading operations and facilitates the operations themselves.

Besides, the invention provides a household appliance device for the washing which allows to pick up the dirty laundry, waiting for the washing, near the household appliance, without increasing the overall dimensions on the ground.

It is clear that the invention, even if it has been sofar described by referring to a washing device, also relates to a tumble-drying device and the like, wherein a tumble-drying machine is sustained by the frame 11 with sliding shelf 13 and sliding basket 14.

## Claims

1. Household appliance device for the washing, comprising a washing machine, a tumble-drying machine or the like, **characterized in that** it comprises a frame (11) for supporting said machine (M), wherein the height of the frame (11) is chosen so that the opening (O) of the overlain machine (M) can be accessed, for the unloading and loading operations of the laundry, by a person in erect position.

2. Device according to claim 1, **characterized in that** it comprises a supporting horizontal shelf (13), slidingly assembled and which can be extracted and closed again like a drawer with respect to the frame (11), so that said household appliance device for the washing (10) allows to perform the following operations, whereas the person who performs them substantially keeps the erect position:
- introduction into the machine (M), through the opened opening (O), of the laundry previously accumulated onto said supporting horizontal shelf (13) extracted with respect to the frame (11), and
- extraction from the machine (M), through the opened opening (O), of the laundry which is accumulated onto said supporting horizontal shelf (13) extracted with respect to the frame 11.

3. Device according to claim 1 and/or 2, **characterized in that** it comprises a sliding basket (14) with respect to said frame (11), between a position of minimum overall dimensions inside the frame (11) itself and an extracted position with respect to said frame, so that said basket (14) allows to pick up the dirty laundry, waiting for the washing, near the household appliance device for the washing, without increasing the overall dimensions onto the ground.

4. Device according to one or more of the preceding claims, **characterized in that** said frame (11) is made of metallic sections and has basic sizes substantially corresponding to the ones of the overlain machine (M).

5. Device according to one or more of the preceding claims, **characterized in that** said frame (11) comprises a horizontal plane rectangular frame (11.1) and four vertical legs (11.2), respectively fastened onto the angles of the frame (11.1) and extended downwards from the frame itself, whereas two opposed longitudinal prismatic guides (12) are respectively fastened parallely and immediately below with respect to two opposite iron girders (11.6) of the frame (11.1) and **in that** said supporting horizontal shelf (13) is assembled slidingly with respect to said guides (12), so as to be able to be extracted and closed again like a drawer with respect to the frame (11).

6. Device according to one or more of the preceding claims, **characterized in that** said supporting horizontal shelf (13) is formed by a peripheral rectangular frame (13.1), equipped with wheels or sliding bearings (13.2) with respect to said guides (12) and by a resting inner plane (13.3), for example a grid, fastened with respect to the peripheral frame (13.1).

7. Device according to one or more of the preceding claims, **characterized in that** said supporting horizontal shelf (13) is arranged below the opening (O) of the machine (M), proximate the opening itself.

8. Device according to one or more of the preceding claims, **characterized in that** said basket (14) is sliding onto the ground on wheels (14.1) and it is arranged, on the stand-by position, in the inner free compartment of the frame (11), accessible through the front opening between the front legs (11.2) of the frame itself, and below said supporting horizontal shelf (13).

9. Device according to one or more of the preceding claims, **characterized in that** the bottom (14.2) and the front wall (14.3) of said basket (14) are full, whereas the remaining side walls (14.4) are made of a grid-like structure.

10. Device according to one or more of the preceding claims, **characterized in that** said frame (11) is equipped with an insulated electric cable (15) for the earthing, for example electrically connected to a corresponding earthing terminal of the overlain machine (M).
